(19) Europäisches Patentamt
European Patent Office
Office européen des brevets

(11) Veröffentlichungsnummer: 0 113 019
B1

(12) # EUROPÄISCHE PATENTSCHRIFT

(45) Veröffentlichungstag der Patentschrift: 21.05.86

(51) Int. Cl.⁴: C 07 F 9/32

(21) Anmeldenummer: 83111653.8

(22) Anmeldetag: 22.11.83

(54) **Verfahren zur kontinuierlichen Herstellung von 2-Carboxyethylalkyl-phosphinsäuredialkylestern.**

(30) Priorität: 08.12.82 DE 3245364

(43) Veröffentlichungstag der Anmeldung: 11.07.84 Patentblatt 84/28

(45) Bekanntmachung des Hinweises auf die Patenterteilung: 21.05.86 Patentblatt 86/21

(84) Benannte Vertragsstaaten: AT BE CH DE FR GB IT LI NL

(56) Entgegenhaltungen:
DE-B-2 127 821
Patent Abstracts of Japan Band 1, Nr. 59, 8. Juni 1977 Seite 633C77
Patent Abstracts of Japan Band 1, Nr. 111, 26. September 1977 Seite 2590C77

(73) Patentinhaber: HOECHST AKTIENGESELLSCHAFT, Postfach 80 03 20, D-6230 Frankfurt am Main 80 (DE)

(72) Erfinder: Gehrmann, Klaus, Dr., Geschwister-Scholl-Strasse 31, D-5042 Erftstadt (DE)
Erfinder: Ohorodnik, Alexander, Dr., Kastanienweg 24, D-5042 Erftstadt (DE)
Erfinder: Rosenthal, Johannes, Dr., Remigiusstrasse 32, D-5000 Köln 41 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 113 019 B1

LIBER, STOCKHOLM 1986

**Beschreibung**

Dialkylester von 2-Carboxyethyl-alkyl-phosphinsäuren finden als Flammschutzmittel oder als Zwischenprodukte für die Synthese von Pflanzenschutzmitteln Verwendung.

Es ist gemäß der Veröffentlichung von V.K. Khairullin und Mitarbeiter in Dokl. Akad. Nauk SSSR 162, 827-828 und Zh. Obshch. Khim. 36, Seiten 289-296 bekannt, Dialkylester von 2-Carboxyethyl-alkyl-phosphinsäuren durch Umsetzung von 2-Chlorformylethyl-alkyl-phosphinsäurechloriden mit Alkoholen in Gegenwart eines tertiären Amins entsprechend nachstehender Reaktionsgleichung in einer Ausbeute von 50-60 % der Theorie herzustellen.

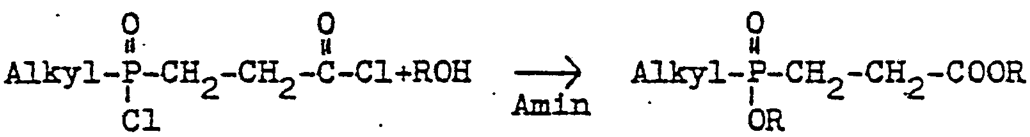


Ein besseres Ausbeuteergebnis wird bei dem Verfahren nach A.N. Pudovik, beschrieben in Jzv. Akad. Nauk SSSR 1952, Seiten 902-907, erzielt, wobei dieses Verfahren dadurch gekennzeichnet ist, daß man einen Alkanphosphonigsäure-monoalkylester mit einem Acrylsäurealkylester in alkoholischer Lösung und in Gegenwart eines Metallalkoholats, wie z.B. Natriumalkoholat, als Katalysator umsetzt, wobei der entstehende 2-Carboxyethyl-alkyl-phosphinsäuredialkylester in einer Ausbeute von 74 % der Theorie erhalten wird, sofern die Alkylgruppe der Esterreste ein $C_4R_9$-Rest ist.

Aus den Ausführungen von Pudovik geht hervor, daß die beschriebene Reaktion bei Zugabe der Katalysatorlösung zu den übrigen Ausgangskomponenten sehr hefig verläuft und das Reaktionsgemisch sich dabei sehr stark erhitzt. Zur technischen Herstellung großer Produktmengen ist deshalb dieses Verfahren nicht geeignet.

Es bestand nur mehr die Aufgabe, das Verfahren von Pudovik derart zu modifizieren, daß die Herstellung der erfindungsgemäßen Phosphinsäuredialkylester in technischem Maß stab und in verbesserter Ausbeute ermöglicht wird.

Gegenstand der Erfindung ist ein Verfahren zur kontinuierlichen Herstellung von 2-Carboxyethyl-alkyl-phosphinsäuredialkylestern der allgemeinen Formel I

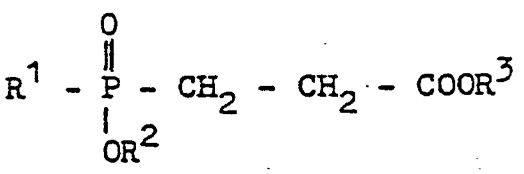
(I)

durch Umsetzung von Alkanphosphonigsäure-monoalkylestern der allgemeinen Formel II mit Acrylsäureestern der allgemeinen Formel III

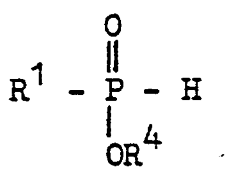
(II)

$CH_2 = CH - COOR^5$ (III)

in Gegenwart von Metallalkoholaten der Formel $(R^6O)_nMe$ und Alkoholen der Formel $R^7OH$, worin
$R^1$ für Alkylreste mit 1-3 Kohlenstoffatomen, $R^2$ bis $R^7$ jeweils für Alkylreste mit 1-6 Kohlenstoffatomen und
Me für die Metalle Li, Na, K mit n = 1
Mg mit n = 2
und Al mit n = 3
stehen, welches dadurch gekennzeichnet ist, daß man

a) in einem zur Kreislaufführung des Reaktionsgemisches ausgebildeten, in sich geschlossenen und mit Kühleinrichtungen sowie Überlauf versehenen Reaktor eine dem Reaktorvolumen entsprechende Volumenmenge des herzustellenden 2-Carboxyethyl-alkyl-phosphinsäuredialkyl-esters, gegebenenfalls im Gemisch mit dem dem Metallalkoholat entsprechenden Alkohol als Lösungsmittel, vorlegt und im Kreislauf führt; daß man

b) in den Reaktor kontinuierlich den Alkanphosphonigsäuremonoalkylester, den Acrylsäurealkylester sowie eine alkoholische Lösung des Metallalkoholats unter Kühlung des im Kreislauf geführten Reaktorinhaltes einleitet und bei einer Temperatur von etwa Null bis 80°C im Verlauf von etwa 5 - 120 Minuten umsetzt, wobei das Molverhältnis des Alkanphosphonigsäuremonoalkylesters zu dem Acrylsäurealkylester etwa 1 zu 0,9 - 2 und die Menge des Metallalkoholats, bezogen auf den Phosphonigsäuremonoalkylester, etwa 0,1 bis 5 Mol% beträgt;

und daß man

c) über den überlauf des Reaktors kontinuierlich ein das Verfahrensprodukt enthaltendes Gemisch abzieht und aus letzterem den 2-Carboxyethyl-alkyl-phosphinsäuredialkyl-ester durch Destillation abtrennt.

Eine bevorzugte Ausführungsform des erfindungsgemäßen Verfahrens besteht darin, daß man die Umsetzung der Reaktionskomponenten bei einer Temperatur von 20 bis 50° C durchführt. Die Beschickung des Reaktors mit den Reaktionskomponenten und der Katalysatorlösung kann beispielsweise derart erfolgen, daß man

a) den Alkanphosphonigsäure-monoalkylester, den Acrylsäurealkylester sowie die alkoholische Lösung des Metallalkohols getrennt in den Reaktor einleitet,

b) ein Gemisch des Alkanphosphonigsäure-monoalkylesters mit dem Acrylsäurealkylester, getrennt von der alkoholischen Lösung des Metallalkoholats, in den Reaktor einleitet oder

c) ein Gemisch des Alkanphosphonigsäure-monoalkylesters mit der alkoholischen Lösung des Metallalkoholats, getrennt von dem Acrylsäurealkylester, in den Reaktor einleitet.

Die Esterreste des Alkanphosphonigsäure-monoalkylesters und des Acrylsäurealkylesters können gleich oder verschieden sein. Weiterhin ist es zweckmäßig, wenn die alkoholische Komponente des Metallalkoholats entweder der alkoholischen Komponente des Alkanphosphonigsäure-monoalkylesters oder der des Acrylsäurealkylesters entspricht.

Schließlich bestehen bevorzugte Merkmale der Erfindung darin, daß das Molverhältnis von Alkanphosphonigsäure-monoalkylester zu Acrylsäurealkylester 1 zu 1 - 1,3 die Katalysatormenge, bezogen auf den Phosphonigsäure-monoalkylester, 1-5 Mol% und die Menge des als Lösungsmittel eingesetzten Alkohols 0,1 - 1 Mol pro Mol Alkanphosphonigsäure-monoalkylester beträgt. Der beispielsweise als Lösungsmittel für das Metallalkoholat dienende Alkohol ist unerläßlich, da er zur Erzielung einer hohen Ausbeute an dem erwünschten Verfahrensprodukt beiträgt.

Im Falle des Einsatzes von Phosphonigsäureester und Acrylsäureester mit unterschiedlichen Esterresten sowie einer diesen Esterresten entsprechenden alkoholischen Metallalkoholatlösung wird ein Mischprodukt als Verfahrensprodukt erhalten.

Gemäß der erfindungsgemäßen Verfahrensweise wird es ermöglicht, in technischem Maßstab kontinuierlich 2-Carboxy-ethyl-alkyl-phosphinsäuredialkylester in einer bisher nicht erreichten Ausbeute von etwa 90 % der Theorie herzustellen.

Die folgenden Beispiele dienen in Verbindung mit der Zeichnung zur Erläuterung des Verfahrens der Erfindung.

**Beispiel 1:** Herstellung des Diethylesters der 2-Carboxy-ethyl-ethyl-phosphinsäure ($R^1 = R^2 = R^3 = C_2H_5$)

Ein Umlaufreaktor mit einem Inhalt von 1l, der gemäß Zeichnung aus den ummantelten Rohren 1 und 2 bestand, die über die Leitungen 3 und 4 miteinander verbunden waren, wurde mit einem Gemisch aus 1000 g (4,50 Mol) des herzu stellenden 2-Carboxyethyl-ethyl-phosphinsäurediethylesters und 62 g (1,35 Mol) Ethanol bis zur Höhe des Überlaufs 5 gefüllt. Nach Inbetriebnahme der Pumpe 6 wurden stündlich über die Leitung 7 ein Gemisch von 732 g (6,00 Mol) Ethanphosphonigsäure-monoethylester und 600 g (6,00 Mol) Ethylacrylat sowie über die Leitung 8 eine Lösung von 16,8 g (0,20 Mol) Kaliumethylat in 120 g (2,61 Mol) Ethanol eindosiert, wobei mit Hilfe des Kühlwasserkreislaufes 9 eine Temperatur der Reaktionsmischung von 40-42° C eingehalten wurde. Das durch die Leitung 5 überlaufende Rohprodukt wurde über 30 Stunden gesammelt und ergab mit dem nach dem Abstellen über die Leitung 10 aus dem Reaktor abgelassenen Produkt eine Gesamtmenge von 45,1 kg. Nach Abtrennung der Leitsieder durch Destillation unter Wasserstrahlvakuum und Filtration wurde das Produkt in einem Dünnschichtverdampfer unter Vakuum destilliert und es wurden 37,17 kg (167,4 Mol) Diethylester der 2-Carboxyethyl-ethyl-phosphinsäure erhalten, was nach Abzug der im Reaktor vorgelegten Menge einer Ausbeute von 90,5 % bei einer Leistung von ca. 1200 g/l. h entspricht.

**Beispiel 2:** Herstellung eines Methyl/Isobutyl-Estergemisches der 2-Carboxyethyl-methyl-phosphin-säure ($R^1 = CH_3$; $R^2, R^3 = CH_3$ und $i\text{-}C_4H_9$)

In den in Beispiel 1 beschriebenen Umlaufreaktor wurden 1080 g (6,00 Mol) Dimethylester der 2-Carboxyethylmethylphosphinsäure und 67 g (2,09 Mol) Methanol bis zum Überlauf eingefüllt. Dann wurde unter Kühlung stündlich ein Gemisch von 680 g (5,00 Mol) Methanphosphonigsäure-monoisobutylester, 100 g (3,13 Mol) Methanol und 10,8 g (0,20 Mol) Natriummethylat sowie über eine getrennte Leitung 470 g (5,60 Mol) Methylacrylat eindosiert, wobei man die Temperatur der Reaktionsmischung durch äußere Kühlung auf 24-26° C hielt. Nach 24 Stunden wurde die Umsetzung abgebrochen und man erhielt eine Gesamtmenge Rohprodukt aus dem kontinuierlichen Überlauf und dem nach dem Abstellen im Reaktor verbliebenen Rest von 31,4 kg, das wie in Beispiel 1 beschrieben aufgearbeitet wurde. Es wurden insgesamt 24,89 kg Estergemisch erhalten, das nach gaschromatographischer Analyse wie folgt zusammengesetzt war:

Dimethylester 33,3 Gew% entspricht 46,05 Mol
Methyl/Isobutylester 47,2 Gew% entspricht 52,92 Mol
Diisobutylester 19,5 Gew% entspricht 18,38 Mol

Nach Abzug der im Reaktor vorgelegten Menge an Dimethylester entspricht dies einer Ausbeute von 92,8 % bei einer Leistung von etwa 1000 g/l. h.

**Patentansprüche**

1. Verfahren zur kontinuierlichen Herstellung von 2-Carboxyethyl-alkyl-phosphinsäuredialkylestern der allgemeinen Formel I

$$R^1 - \overset{\overset{\displaystyle O}{\|}}{\underset{\underset{\displaystyle OR^2}{|}}{P}} - CH_2 - CH_2 - COOR^3 \qquad (I)$$

durch Umsetzung von Alkanphosphonigsäure-monoalkylestern der allgemeinen Formel II mit Acrylsäureestern der allgemeinen Formel III

$$R^1 - \overset{\overset{\displaystyle O}{\|}}{\underset{\underset{\displaystyle OR^4}{|}}{P}} - H \qquad (II) \qquad CH_2 = CH - COOR^5 \; (III)$$

in Gegenwart von Metallalkoholaten der Formel $(R^6O)_nMe$ und Alkoholen der Formel $R^7OH$, worin
$R^1$ für Alkylreste mit 1-3 Kohlenstoffatomen,
$R^2$ bis $R^7$ jeweils für Alkylreste mit 1-6 Kohlenstoffatomen und
Me für die Metalle Li, Na, K mit n = 1
Mg mit n = 2
und Al mit n = 3
stehen, dadurch gekennzeichnet, daß man

a) in einem zur Kreislaufführung des Reaktionsgemisches ausgebildeten, in sich geschlossenen und mit Kühleinrichtungen sowie Überlauf versehenen Reaktor eine dem Reaktorvolumen entsprechende Volumenmenge des herzustellenden 2-Carboxyethyl-alkyl-phosphinsäure-dialkylesters, gegebenenfalls im Gemisch mit dem dem Metallalkoholat entsprechenden Alkohol als Lösungsmittel, vorlegt und im Kreislauf führt; daß man

b) in den Reaktor kontinuierlich den Alkanphosphonigsäuremonoalkylester, den Acrylsäurealkylester sowie eine alkoholische Lösung des Metallalkoholats unter Kühlung des im Kreislauf geführten Reaktorinhaltes einleitet und bei einer Temperatur von etwa Null bis 80° C im Verlauf von etwa 5-120 Minuten umsetzt, wobei das Molverhältnis des Alkanphosphonigsäuremonoalkylesters zu dem Acrylsäurealkylester etwa 1 zu 0,9 - 2 und die Menge des Metallalkoholats, bezogen auf den Phosphonigsäuremonoalkylester, etwa 0,1 bis 5 Mol% beträgt; und daß man

c) über den Überlauf des Reaktors kontinuierlich ein das Verfahrensprodukt enthaltendes Gemisch abzieht und aus letzterem den 2-Carboxyethyl-alkyl-phosphinsäure-dialkylester durch Destillation abtrennt.

2. Verfahren nach Anspruch 1, dadurch gekennzeichnet, daß man die Umsetzung der Reaktionskomponenten bei einer Temperatur von 20 bis 50° C durchführt.

3. Verfahren nach Anspruch 1 oder 2, dadurch gekennzeichnet, daß man

a) den Alkanphosphonigsäure-monoalkylester, den Acrylsäurealkylester sowie die alkoholische Lösung des Metallalkoholats getrennt in den Reaktor einleitet oder

b) ein Gemisch des Alkanphosphonigsäure-monoalkylesters mit dem Acrylsäurealkylester, getrennt von der alkoholischen Lösung des Metallalkoholats, in den Reaktor einleitet oder

c) ein Gemisch des Alkanphosphonigsäure-monoalkylesters mit der alkoholischen Lösung des Metallalkoholats, getrennt von dem Acrylsäurealkylester, in den Reaktor einleitet.

4. Verfahren nach Anspruch 1-3, dadurch gekennzeichnet, daß die Esterreste von Alkanphosphonigsäure-monoalkylester und Acrylsäurealkylester gleich oder verschieden sind.

5. Verfahren nach Anspruch 1-4, dadurch gekennzeichnet, daß die alkoholische Komponente des Metallalkoholats der alkoholischen Komponente des Alkanphosphonigsäure-monoalkylesters bzw. des Acrylsäurealkylesters entspricht.

6. Verfahren nach Anspruch 1-5, dadurch gekennzeichnet, daß das Molverhältnis von Alkanphosphonigsäure-monoalkylester zu Acrylsäurealkylester 1 zu 1-1,3 und die Katalysatormenge, bezogen auf den Phosphonigsäure-monoalkylester, 1-5 Mol% beträgt.

7. Verfahren nach Anspruch 1-6, dadurch gekennzeichnet, daß man pro Mol Alkanphosphonigsäure-monoalkylester 0,1-1 Mol Alkohol als Lösungsmittel einsetzt.

**Claims**

1. Process for the continuous production of 2-carboxyethyl-alkyl-phosphinic acid dialkylesters of the following general formula I

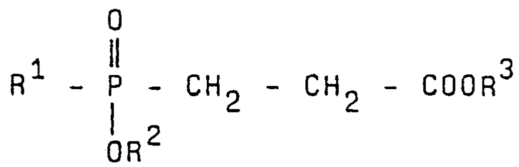

(I)

by reacting an alkanephosphonous acid monoalkylester of the following general formula II

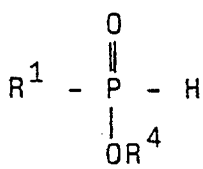

(II)

with an acrylic acid ester of the following general formula III
$CH_2 = CH - COOH^5$
in the presence of a metal alcoholate of the formula $(R^6O)_nMe$ and an alcohol of the formula $R^7OH$, in which formulae
$R^1$ stands for an alkyl group having from 1 to 3 carbon atoms,
$R^2$ through $R^7$ each stand for an alkyl group having from 1 to 6 carbon atoms, and
Me stands for the metals Li, Na, K where n is 1
Mg where n is 2 and
Al where n is
which comprises:
a) introducing and circulating a quantity by volume of the 2-carboxyethyl-alkyl-phosphinic acid dialkylester to be produced corresponding to the reactor volume if desired in admixture with an alcohol corresponding to the metal alcoholate as a solvent into a reactor adapted to circulate the reaction mixture therein, closed in itself and provided with cooling means and an overflow;
b) continuously introducing the alkanephosphonousacid monoalkylester, acrylic acid alkylester and an alcoholic solution of the metal alcoholate into the reaction while cooling the material circulated therein, and reacting the whole at a temperature of about 0 to 80°C within a period of about 5 to 120 minutes, the alkanephosphonous acid monoalkylester and acrylic acid alkylester being used in a molar ratio of about 1: 0.9 - 2, and the quantity of metal alcoholate based on the phosphonous acid monoalkylester, being about 0.1 to 5 mol %; and
c) continuously removing a mixture containing final product through the overflow of the reactor and distillatively separating 2-carboxyethyl-alkyl-phosphinic acid dialkylester from the mixture.

2. Process as claimed in claim 1, wherein the reaction of the reactants is effected at a temperature of 20 to 50°C.

3. Process as claimed in claim 1 or 2, wherein
a) the alkanephosphonous acid monoalkylester, acrylic acid alkylester and alcoholic solution of the metal alcoholate are introduced separately into the reaction or
b) a mixture of the alkanephosphonous acid monoalkylester and acrylic acid alkylester is introduced separately from the alcoholic solution of the metal alcoholate into the reactor or
c) a mixture of the alkanephosphonous acid monoalkylester and alcoholic solution of the metal alcoholate is introduced separately from the acrylic acid alkylester into the reactor.

4. Process as claimed in claims 1- 3, wherein the alkanephosphonous acid monoalkylester and acrylic acid alkylester have identical

5. Process as claimed in claims 1- 4, wherein the alcoholic component of the metal alcoholate corresponds to the alcoholic component of the alkanephosphonous acid monoalkylester and acrylic acid alkylester, respectively.

6. Process as claimed in claims 1 - 5, wherein the alkanephosphonous acid monoalkylester and acrylic acid alkylester are used in a molar ratio of 1: 1 - 1.3 and the catalyst quantity based on the phosphonous acid monoalkylester is 1 - 5 mol %.

7. Process as claimed in claims 1 - 6, wherein 0.1 to 1 mol alcohol is used as the solvent per mol alkanephosphonous acid monoalkylester.

**Revendications**

1. Procédé de préparation en continu d'estersdialkyliques d'acides 2-carboxyéthyl-alkyl-phosphiniques de formule générale I

$$R^1 - \underset{OR^2}{\overset{O}{\overset{\|}{P}}} - CH_2 - CH_2 - COOR^3 \qquad (I)$$

par réaction d'esters monoalkyliques d'acides alcanephosphoneux de formule générale II avec des esters d'acide acrylique de formule générale III

$$R^1 - \underset{OR^4}{\overset{O}{\overset{\|}{P}}} - H \qquad (II) \qquad\qquad CH_2 = CH - COOR^5 \qquad (III)$$

en présence d'alcoolates métalliques de formule $(R^6O)$ Me et d'alcools de formule $R^7OH$, formules dans lesquelles

$R^1$ représente des groupes alkyliques en $C_1$-$C_3$

$R^2$ a $R^7$ représentent chaque fois des groupes alkyliques en $C_1$-$C_6$ et Me représente les metaux Li, Na, K avec n = 1

Mg avec n = 2

et Al avec n = 3

caractérisé en ce que

a) on introduit et on fait circuler dans un reacteur conçu pour la circulation du mélange réactionnel, fermé sur lui-même et muni de dispositifs de refroidissement ainsi que d'un trop-plein, une quantité en volume de l'ester dialkylique d'acide 2-car-boxyéthyl-alkyl-phosphinique à préparer correspondant au volume du réacteur, éventuellement en association avec l'alcool correspondant à l'alcoolate métallique comme solvant;

b) on introduit en continu dans le réacteur l'ester monoalkylique de l'acide alcanephosphoneux, l'acrylate d'alkyle ainsi qu'une solution alcoolique de l'alcoolate métallique avec refroidissement du mélange en circulation dans le réacteur et on fait réagir à une température d'environ zéro à 80°C en environ 5 à 120 min, le rapport molaire ester monoalkylique d'acide alcanephosphoneux/acrylate d'alkyle étant égal à environ 1 : 0,9 - 2 et la quantité de l'alcoolate métallique étant d'environ 0,1 à 5 mol %, par rapport à l'ester monoalkylique d'acide phosphoneux; et

c) on retire en continu par le trop-plein du réacteur un mélange contenant le produit fini et on sépare de ce dernier par distillation l'ester dialkylique d'acide 2-carboxyéthyl-alkyl-phosphinique.

2. Procédé selon la revendication 1, caractérisé en ce que l'on effectue la réaction des réactifs à une température de 20 - 50°C.

3. Procédé selon la revendication 1 ou 2, caractérisé en ce que

a) on introduit séparément dans le réacteur l'ester monoalkylique de l'acide alcanephosphoneux, l'acrylate d'alkyle ainsi que la solution alcoolique de l'alcoolate métallique ou

b) on introduit dans le réacteur un mélange ester monoalkylique d'acide alcanephosphoneux/acrylate d'alkyle séparément de la solution alcoolique de l'alcoolate métallique ou

c) on introduit dans le réacteur un mélange ester monoalkylique d'acide alcanephosphoneux/solution alcoolique de l'alcoolate métallique, séparément de l'acrylate d'alkyle.

4. Procédé selon les revendications 1 - 3, caracterisé en ce que les groupes esters de l'ester monoalkylique d'acide alcanephosphoneux et de l'acrylate d'alkyle sont identiques ou différents.

5. Procédé selon les revendications 1 - 4, caracterisé en ce que le composant alcoolique de l'alcoolate métallique correspond au composant alcoolique de l'ester monoalkylique d'acide alcanephosphoneux ou bien de l'acrylate d'alkyle.

6. Procédé selon les revendications 1 - 5, caracterisé en ce que le rapport molaire ester monoalkylique d'acide alcanephosphoneux/acrylate d'alkyle est égal à 1 : 1 - 1,3 et la quantité de catalyseur est de 1,5 mol %, par rapport à l'ester monoalkylique d'acide phosphoneux.

7. Procédé selon les revendications 1 - 6, caracterisé en ce que l'on utilise 0,1 - 1 mol d'alcool comme solvant par mole d'ester monoalkylique d'acide alcanephosphoneux.

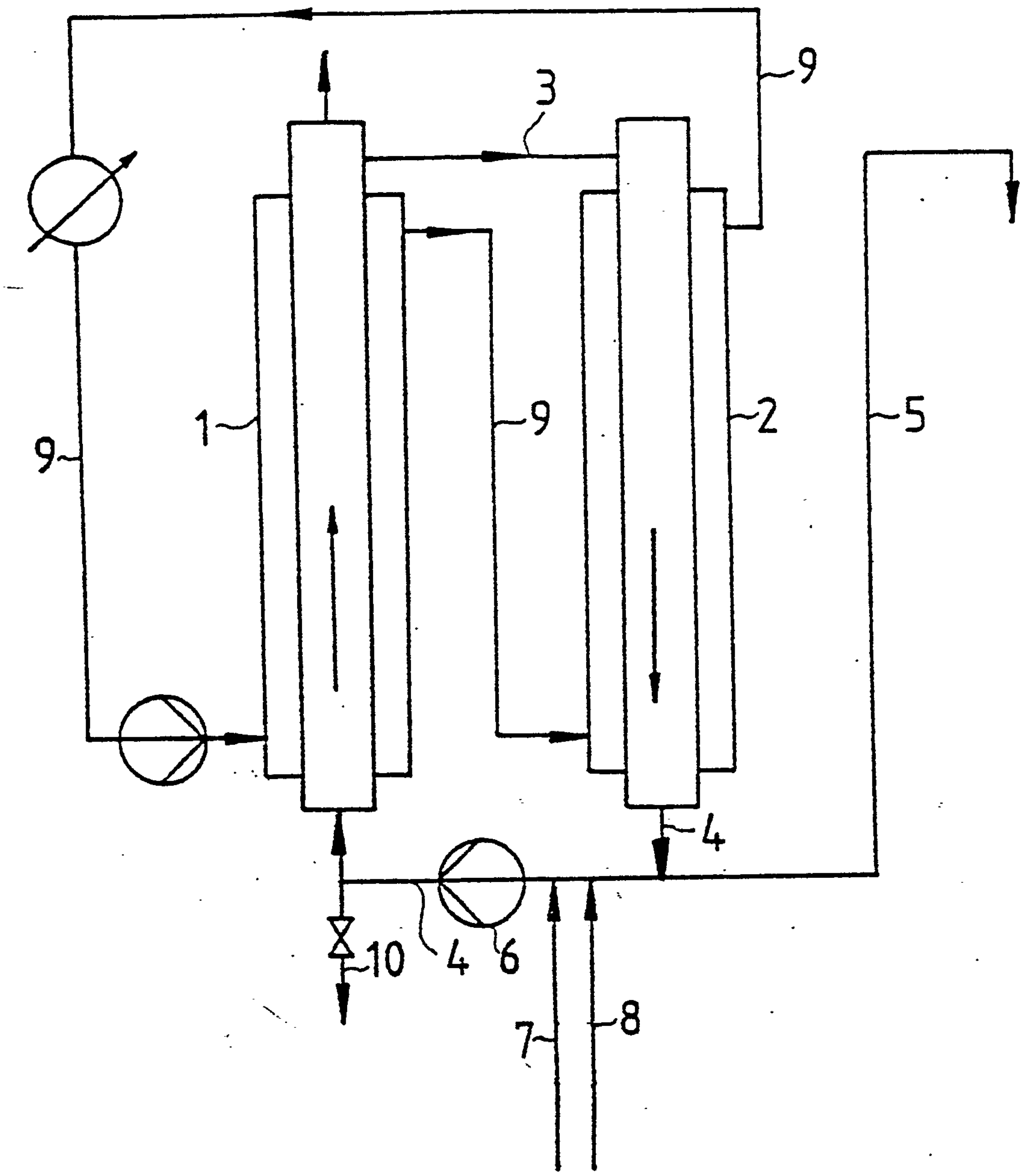
9
3
9
1
9
2
5
4
10
4
6
7
8